# EUROPEAN PATENT APPLICATION

(11) **EP 2 887 254 A1**
(43) Date of publication of application: **24.06.2015**
(21) Application number: 13306784.3
(22) Date of filing: 19.12.2013
(51) Int. Cl.: G06F 21/36

(54) **Method and device for verifying symbols selected amongst sets of superposed symbols displayed by an electronic device cooperating with a security element**

(71) Applicant: Gemalto SA, 92190 Meudon (FR)
(72) Inventor: Chen, Yuexi, 13705 LA CIOTAT (FR); Martin, Alain, 13705 LA CIOTAT (FR); Lemaire, François, 13705 LA CIOTAT (FR)

(57) **Abstract**

A method verifies a selection of symbols displayed onto a display means (DM) of an electronic device (ED) cooperating with a security element (SE) storing a secret code defined by symbols. This method comprises a step (i) during which the security element (SE) generates an image comprising a plurality of different sets of at least two superposed symbols, and memorises the position of each secret code symbol in the generated image in a verification order, a step (ii) during which this generated image is displayed onto the display means (DM), a step (iii) during which a user selects each secret code symbol into the displayed image, and then one transmits positions of these selected symbols to the security element (SE), and a step (iv) during which the security element (SE) compares the memorised position(s) with each transmitted position, and considers that the secret code has been provided in case of position identities.

## Description

### Technical field

The present invention relates to verification of user secret codes (or credentials) by security elements storing secret codes (or credentials) and cooperating with electronic devices.

### Background of the invention

The number of user authentication operations keeps increasing on non-secured electronic devices, like connected PCs, smartphones or tablets, or in non-secured environments, like automated teller machines (or ATMs) or automated banking machines (or ABMs), or else cashpoints. In the same time, the number of malwares, such as key loggers, that are fraudulently installed into user electronic devices or in the environment of secured electronic devices keeps also increasing, which creates more and more threats to user authentication credentials or user secret codes.

Indeed, it is now possible to ill-intentioned persons to automatically retrieve the secret code of a user by internally analysing the digits he selects with a pin pad (possibly displayed on a screen) or a computer mouse, or else by registering his actions by means of a digital camera (possibly coupled with a character recognition software).

To improve the situation, it has been recently proposed to generate in the user security element images containing any symbols (or keys) that may be used into a secret code but with positions and appearances that vary randomly. For instance, these images may be the so-called CAPTCHA®. This solution makes it hard for an internal malware (like a key-logger) to interpret the user selections. But this solution is still vulnerable to external malwares capable of recording screen display and client actions, because an ill-intentioned person may perform a human interpretation of the recorded information, and then retrieve fraudulently a user authentication credential or a user secret code.

### Summary of the invention

So, an objective of the invention is to improve the situation.

To this effect the invention provides notably a method, intended for verifying a selection of symbols displayed onto a display means of an electronic device cooperating with a security element storing a secret code defined by symbols, and comprising:
- a step (i) during which this security element generates an image comprising a plurality of different sets of at least two superposed symbols, including the ones defining this secret code, and memorises the position of each secret code symbol in the generated image and the order in which they should be verified,
- a step (ii) during which said generated image is displayed onto the display means,
- a step (iii) during which a user selects successively each symbol defining the secret code into the displayed image, and then one transmits successively positions of the selected symbols to the security element, and
- a step (iv) during which the security element compares the memorised position(s) of each secret code symbol with each transmitted position in the order (of verification), and in case of position identities it considers that this secret code has been provided by the user.

The method according to the invention may include additional characteristics considered separately or combined, and notably:
- in step (iv), in the case where the generated image comprises sets that have no common symbol, the security element may compare each memorised position of each secret code symbol with each transmitted position in the order. In a variant, in step (iv), in the case where the generated image comprises sets that have at least one common symbol, the security element compares every memorised position of each secret code symbol with each transmitted position in the order;
- the symbols may be chosen from a group comprising at least a first sub-group of digits, a second sub-group of shapes, a third sub-group of alphabetical characters, and a fourth sub-group of signs;
- some of the symbols may be associated to a colour chosen from a group of colours and participating to the secret code;
- in step (iii) the user may select successively each symbol defining his secret code by means of a human/machine interface of the electronic device;
   ➢ the human/machine interface may comprise a selection means that is chosen from a group comprising at least a computer mouse and a detection means integrated into a touch screen defining the display means.

The invention also provides a computer program product comprising a set of instructions arranged, when it is executed by processing means, for performing a method such as the one above introduced to allow verifying a selection of symbols displayed onto a display means of an electronic device cooperating with a security element storing a secret code defined by symbols.

The invention also provides a device, intended for verifying a selection of symbols displayed onto a display means of an electronic device cooperating with a security element storing a secret code defined by symbols, and arranged, when this security element has received positions of symbols successively selected by a user into an image displayed onto the display means and comprising a plurality of different sets of at least two superposed symbols, including the ones defining this secret code, whose positions into this generated image are memorised by the security element in the order in which they should be verified, for comparing the memorised position(s) of each secret code symbol with each transmitted position in this order, and in case of position identities, for considering that this secret code has been provided by the user.

The invention also provides a security element, intended for storing a secret code defined by symbols and for cooperating with an electronic device comprising a display means, and comprising a device such as the one above introduced.

Such a security element may be chosen from a group comprising at least a SIM card, a USIM card, a smart card and a Host/Hardware Security Module (or HSM), for instance.

### Brief description of the figures

Other features and advantages of the invention will become apparent on examining the detailed specifications hereafter and the appended drawings, wherein:
- figure 1 schematically and functionally illustrates an example of electronic device, cooperating with a security element comprising a device according to the invention, and coupled to a service server via a communication network,
- figure 2 schematically illustrates an example of algorithm comprising sub steps implementing an embodiment of a method according to the invention,
- figure 3 schematically illustrates a first example of image comprising sets of two superposed symbols, where the differents sets do not have any common symbol,
- figure 4 schematically illustrates a second example of image comprising sets of two superposed symbols associated to colours, where the differents sets do not have any common symbol, and
- figure 5 schematically illustrates a third example of image comprising sets of two superposed symbols, where some sets have common symbols.

### Detailed description of the preferred embodiment

The appended drawings may serve not only to complete the invention, but also to contribute to its definition, if need be.

The invention aims, notably, at offering a verification method, and an associated verification device D, intended for verifying a selection of symbols displayed onto a display means DM of an electronic device ED cooperating with a security element SE storing a secret code (or credentials) defined by symbols.

In the following description it will be considered that the electronic device ED is an automated teller machine (or ATM) or an automated banking machine (or ABM). But the invention is not limited to this type of electronic device. It concerns a lot of electronic devices, portable or not, and arranged for cooperating with a security element SE. So, it concerns also card readers, mobile telephones (like smartphones), electronic tablets, set-top boxes, residential gateways, laptops, personal computers, connected televisions and game consoles, for instance.

Moreover, in the following description it will be considered that the security element (or data medium) SE is a smart card. But the invention is not limited to this type of security element. Indeed, it concerns any type of security element comprising a memory means MM, storing a user secret code (or credentials) defined by symbols, and that can be read by an electronic device after having been coupled to the latter, and notably a SIM card, a USIM card, a chip card, an integrated circuit card or a Host/Hardware Security Module.

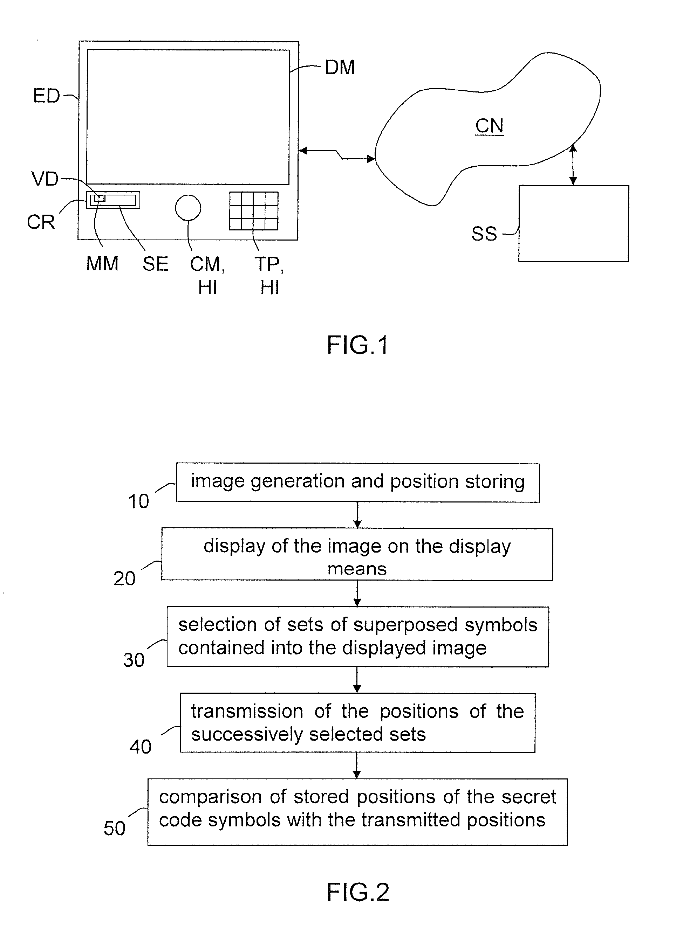

In the example illustrated in figure 1 the electronic device ED comprises a display means DM (such as a screen) and a card reader CR arranged for reading data stored into memory means MM of a security element SE that is introduced by a user into its slot.

This electronic device ED further comprises a human/machine interface HI arranged for allowing a user to select symbols comprised into an image displayed by its display means DM. In the non-limiting example illustrated in figure 1, the display means DM is a classical screen. So, the human/machine interface HI comprises a computer mouse CM defining a symbol selection means. But in a variant, in the case where the display means DM is a touch screen, the human/machine interface HI may comprise a detection means defining a symbol selection means and integrated into this touch screen.

As illustrated, the human/machine interface HI may also comprise a touch pad TP allowing a user to provide the electronic device ED with data, for instance for chosing an item associated with an alphanumeric symbol in a displayed menu or for defining a number.

Also as illustrated this electronic device ED may be also capable of establishing communications (of a wireless type or a wired type) with at least one communication network CN, to which may be coupled at least one service server SS.

As mentioned before, the invention proposes notably a verification method intended for verifying a selection of symbols displayed onto the display means DM of the electronic device ED when it cooperates with a security element SE. Such a method comprises four steps (i), (ii), (iii) and (iv).

In the first step (i) of this verification method the security element SE generates an image comprising a plurality of different sets of at least two superposed symbols, including the ones defining the secret code (stored into the memory means MM of this security element SE). Then, the security element SE memorises the position of each secret code symbol in the generated image and the order in which they should be verified.

This first step (i) corresponds to the sub step 10 of the example of algorithm illustrated in figure 2. It may be implemented by a verification device VD that may be made of software modules, for instance stored into the memory means MM of the electronic device ED. In this case it constitutes a computer program product comprising a set of instructions arranged for performing the first (i) and fourth (iv) steps of the verification method when it is executed by processing means of the electronic device ED. But this is not mandatory. Indeed, it may be made of a combination of electronic circuit(s) (or hardware module(s)) and software modules.

It is important to note that an image comprises at least two sets that either have no common symbol, or may have at least one common symbol. In the first alternative a symbol appears only one time in an image and therefore belongs to only one set of this image. In the second alternative a symbol may appears several times (for instance, two, three or four times) in an image and therefore belongs to several sets of this image.

The combination of symbols into the different sets and the positions of the sets may vary randomly from an image to another one.

Many types of symbols may be used into an image. For instance, they may be chosen from a group comprising at least a first sub-group of digits and/or a second sub-group of shapes and/or a third sub-group of alphabetical characters and/or a fourth sub-group of signs.

Moreover, some of the symbols may be associated to a colour chosen from a group of colours and participating to the secret code.

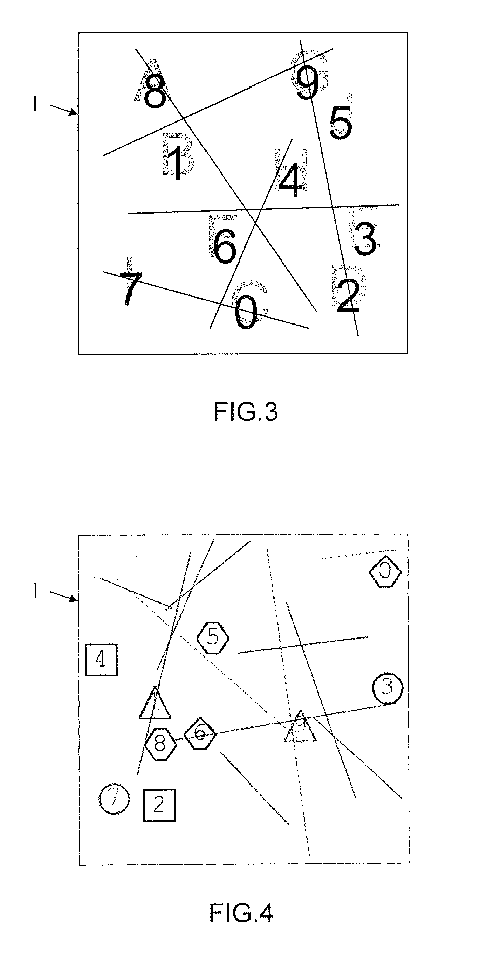

A first example of image comprising sets of two superposed symbols is schematically illustrated in figure 3. In this first example the image symbols are chosen into the first sub-group of digits (here 1 to 9) and the third sub-group of alphabetical characters (here A to Z), and each symbol appears only one time in the image and therefore belongs to only one set of this image.

A second example of image comprising sets of two superposed symbols associated to colours is schematically illustrated in figure 4. In this second example the image symbols are chosen into the first sub-group of digits (here 1 to 9) and the second sub-group of shapes (triangle, square, circle, pentagon, hexagon), the different shapes and digits may be respectively associated to different colours (here represented in four different grey levels), and each symbol appears only one time in the image and therefore belongs to only one set of this image.

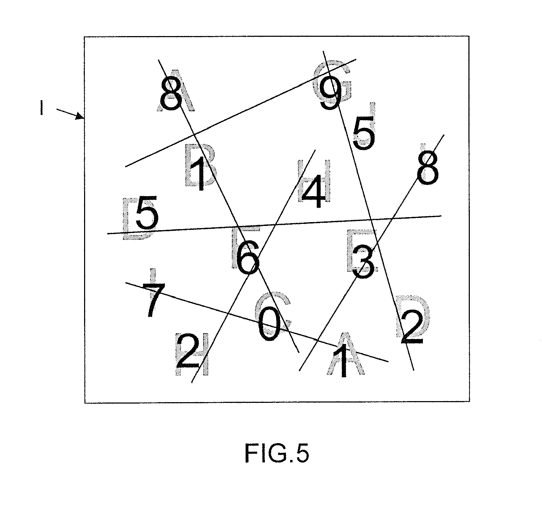

A third example of image comprising sets of two superposed symbols is schematically illustrated in figure 5. In this third example the image symbols are chosen into the first sub-group of digits (here 1 to 9) and the third sub-group of alphabetical characters (here A to Z), and some symbols appear two times in the image and therefore belongs to two sets of this image.

In other examples of image each set could comprise three or four superposed symbols, possibly associated to different colours.

It is important to note that an image may be a CAPTCHA®.

In the second step (ii) of the verification method the image generated in the first step (i) is displayed onto the display means DM (after having been transferred from the verification device VD of the security element SE to the display control means of the electronic device ED).

This second step (ii) corresponds to the sub step 20 of the example of algorithm illustrated in figure 2.

In the third step (iii) of the verification method the user of the security element SE selects successively each symbol defining his secret code into the displayed image. To this effect, he uses (here) the computer mouse CM of the electronic device ED to move the mouse pointer and clicks successively on each set comprising a symbol belonging to his secret code, in the order of occurrence of these symbols into his secret code. Each position of the mouse pointer where the user has clicked, and which corresponds to a selected symbol, is registered.

Then one (the human/machine interface HI) transmits successively the (registered) positions of the selected symbols to the security element SE in their order of selection.

This third step (iii) corresponds to the sub steps 30 and 40 of the example of algorithm illustrated in figure 2.

For the user, each click is explicit because it is intended for selecting a chosen symbol of a set, but for a third party, such as a hacker, there is uncertainty on which symbol has been effectively selected into each "clicked set". For instance, if the user secret code is AD51 and that the generated image is the one illustrated in figure 3, the user must click on a first set comprising A and 8, then on a second set comprising D and 2, then on a third set comprising J and 5, and finally on a fourth set comprising B and 1. In this case the hacker cannot determine if the first click was intended for selecting A or 8, if the second click was intended for selecting D or 2, if the third click was intended for selecting J or 5, and if the fourth click was intended for selecting B or 1.

If the sets may have common symbols it is still more difficult for the hacker to determine the symbols that have been effectively selected by the user.

In the fourth step (iv) of the verification method the security element SE (and more precisely its verification device VD) compares the memorised position(s) of each secret code symbol with each transmitted position in the order (of verification).

Then if the security element SE (and more precisely its verification device VD) finds that each transmitted position is identical to a memorised position of a secret code symbol in the right order, it considers that this secret code has been provided by the user. If at least one memorised position of a secret code symbol is not identical to a corresponding transmitted position, while taking into account the order, the security element SE (and more precisely its verification device VD) generates an error message intended for being displayed by the display means DM and requesting the user to carry out a new symbol selection.

This fourth step (iv) corresponds to the sub step 50 of the example of algorithm illustrated in figure 2.

In step (iv), in the case where the generated image comprises sets that have no common symbol, the security element SE (and more precisely its verification device VD) compares each memorised position of each secret code symbol with each transmitted position in the order. Indeed, if a secret code symbol has a known position in the generated image, then if there is a transmitted position identical to this known position in the corresponding position (according to the order), this means that the user has effectively selected this secret code symbol in the right order.

In step (iv), in the case where the generated image comprises sets having common symbols, at least one symbol of the secret code may be located in at least two different positions into the generated image. So, the security element SE (and more precisely its verification device VD) must compare every memorised position of each secret code symbol with each transmitted position in the order. Then, in the case where it has found that each transmitted position is identical to one of the memorised positions of a secret code symbol in the right order, it may consider that the secret code has been correctly provided by the user.

The invention prevents an ill-intentioned person from determining the user secret code (or user credential) from a single capture of a displayed image and from the user entry (i.e. the sets selected into this displayed image). So, multiple captures (whose number depends on the chosen complexity) must be carried out and then analysed by an ill-intentioned person in order to retrieve, through combination analysis, the user secret code (or credential).

This invention is particularly useful to prevent fraud at ATMs through use of a hidden camera. Indeed, it is very improbable that the same user will come at least twice at the same ATM when the camera is present. This invention also makes theft of user secret codes (or credentials) on mobile devices more difficult, as the ill-intentioned persons would have to wait until several user selections have been performed and then spend the time to analyse these user selections.

The invention is not limited to the embodiments of verification method, computer program product, verification device and security element described above, only as examples, but it encompasses all alternative embodiments which may be considered by one skilled in the art within the scope of the claims hereafter.

## Claims

1. Method for verifying a selection of symbols displayed onto a display means (DM) of an electronic device (ED) cooperating with a security element (SE) storing a secret code defined by symbols, **characterized in that** it comprises a step (i) during which said security element (SE) generates an image comprising a plurality of different sets of at least two superposed symbols, including the ones defining said secret code, and memorises the position of each secret code symbol in said generated image and the order in which they should be verified, a step (ii) during which said generated image is displayed onto said display means (DM), a step (iii) during which a user selects successively each symbol defining said secret code into the displayed image, and then one transmits successively positions of said selected symbols to said security element (SE), and a step (iv) during which said security element (SE) compares the memorised position(s) of each secret code symbol with each transmitted position in said order, and in case of position identities it considers that said secret code has been provided by said user.

2. Method according to claim 1, **characterized in that** in step (iv), in the case where said generated image comprises sets that have no common symbol, said security element (SE) compares each memorised position of each secret code symbol with each transmitted position in said order.

3. Method according to claim 1, **characterized in that** in step (iv), in the case where said generated image comprises sets that have at least one common symbol, said security element (SE) compares every memorised position of each secret code symbol with each transmitted position in said order.

4. Method according to one of claims 1 to 3, **characterized in that** said symbols are chosen from a group comprising at least a first sub-group of digits, a second sub-group of shapes, a third sub-group of alphabetical characters, and a fourth sub-group of signs.

5. Method according to one of claims 1 to 4, **characterized in that** some of said symbols are associated to a colour chosen from a group of colours and participating to said secret code.

6. Method according to one of claims 1 to 5, **characterized in that** in step (iii) said user selects successively each symbol defining said secret code by means of a human/machine interface (HI) of said electronic device (ED).

7. Method according to claim 6, **characterized in that** said human/machine interface (HI) comprises a selection means that is chosen from a group comprising at least a computer mouse and a detection means integrated into a touch screen defining said display means (DM).

8. Computer program product comprising a set of instructions arranged, when it is executed by processing means, for performing the method according to one of the preceding claims to allow verifying a selection of symbols displayed onto a display means (DM) of an electronic device (ED) cooperating with a security element (SE) storing a secret code defined by symbols.

9. Device (VD) for verifying a selection of symbols displayed onto a display means (DM) of an electronic device (ED) cooperating with a security element (SE) storing a secret code defined by symbols, **characterized in that** it is arranged, when said security element (SE) has received positions of symbols successively selected by a user into an image displayed onto said display means (DM) and comprising a plurality of different sets of at least two superposed symbols, including the ones defining said secret code, whose positions into said generated image are memorised by said security element (SE) in the order in which they should be verified, for comparing the memorised position(s) of each secret code symbol with each transmitted position in said order, and in case of position identities, for considering that said secret code has been provided by said user.

10. Security element (SE) for storing a secret code defined by symbols and for cooperating with an electronic device (ED) comprising a display means (DM), **characterized in that** it comprises a device (VD) according to claim 9.

11. Security element according to claim 10, **characterized in that** it is chosen from a group comprising at least a SIM card, a USIM card, a smart card and a Host/Hardware Security Module.
